# EUROPÄISCHE PATENTSCHRIFT

(11) **EP 2 423 771 B1**
(45) Veröffentlichungstag und Bekanntmachung des Hinweises auf die Patenterteilung: **28.12.2016**
(21) Anmeldenummer: 10173719.5
(22) Anmeldetag: 23.08.2010
(51) Int. Cl.: G05B 19/44, G08C 19/02, G05B 19/042

(54) **Analoge Eingabebaugruppe für eine speicherprogrammierbare Steuerung**
Analogue input component for a programmable logic controller
Composant d'acquisition analogique pour un automate programmable

(43) Veröffentlichungstag der Anmeldung: 29.02.2012
(73) Patentinhaber: Siemens Aktiengesellschaft, 80333 München (DE)
(72) Erfinder: Naumovic, Albert, 92237, Sulzbach-Rosenberg (DE)

(56) Entgegenhaltungen:
- Siemens: "SIMATIC Dezentrales Peripheriegerät ET 200M HART-Analogbaugruppen" April 2009 (2009-04), Seiten 1-66, XP002604616 Gefunden im Internet: URL:http://ge-gate.lngs.infn.it/cryo/~gerd a/manuals/et200m_hart_analog_modules_manua l_de-DE_de-DE.pdf [gefunden am 2010-10-11]
- Murata Power Solutions: "4-20mA Current Loop Primer DMS-AN-20" Application Note 17. Juli 2009 (2009-07-17), Seiten 1-3, XP002604617 Gefunden im Internet: URL:http://www.murata-ps.com/data/meters/d ms-an20.pdf [gefunden am 2010-10-11]
- Dave Harrold: "4-20mA Transmitters Alive and Kicking" Control Engineering Online Oktober 1998 (1998-10), XP002604618 Gefunden im Internet: URL:http://www.dataforth.com/catalog/bb/13 3_388652239.pdf [gefunden am 2010-10-11]

## Beschreibung

Die Erfindung betrifft eine analoge Eingabebaugruppe für eine speicherprogrammierbare Steuerung, insbesondere eine analoge Eingabebaugruppe mit mehreren Kanaleingängen.

Aus dem Stand der Technik sind analoge Eingabebaugruppen bekannt. An eine analoge Eingabebaugruppe in einer speicherprogrammierbaren Steuerung können Messgeräte, wie zum Beispiel Messumformer, Thermoelemente, Spannungsmesser und andere Messschaltungen angeschlossen werden. Die analoge Eingabebaugruppe leitet Signale, die von diesen Messgeräten und Messschaltungen empfangen werden, an einen Verstärker der speicherprogrammierbaren Steuerung weiter.

**Das Handbuch der** Firma Siemens: "SIMATIC Dezentrales Peripheriegerät ET 200M HART-Analogbaugruppen" April 2009, S. 53-66**, gibt eine Übersicht über verschiedene HART-Analogbaugruppen.**

Der Erfindung liegt demgegenüber die Aufgabe zugrunde, ein verbessertes Verfahren zum Betrieb einer analogen Eingabebaugruppe, eine verbesserte analoge Eingabebaugruppe, eine verbesserte speicherprogrammierbare Steuerung und ein verbessertes Automatisierungssystem zu schaffen. Die der Erfindung zugrunde liegende Aufgabe wird mit den Merkmalen der unabhängigen Patentansprüche gelöst. Ausführungsformen der Erfindung sind in den abhängigen Patentansprüchen gegeben.

Erfindungsgemäß wird ein Verfahren zum Betrieb einer analogen Eingabebaugruppe in einer speicherprogrammierbaren Steuerung geschaffen. Die analoge Eingabebaugruppe weist ein Massenpotenzial für einen Kanalausgang, einen ersten Kanaleingang, einen zweiten Kanaleingang und einen dritten Kanaleingang auf. Für die Kanaleingänge und den Kanalausgang wird also jeweils das gleiche Massenpotenzial verwendet. Das Massenpotenzial wird vorzugsweise mit 0 Volt angegeben. Das Verfahren umfasst die folgenden Schritte.

Ein Zweidraht-Messumformer wird an den Kanalausgang der analogen Eingabebaugruppe und an den ersten Kanaleingang der analogen Eingabebaugruppe angeschlossen. Ein Vierdraht-Messumformer wird an den ersten Kanaleingang der analogen Eingabebaugruppe und an den zweiten Kanaleingang der analogen Eingabebaugruppe angeschlossen. Weitere Messschaltungen werden an den zweiten Kanaleingang und an den dritten Kanaleingang der analogen Eingabebaugruppe angeschlossen.

Mit Transformatormitteln wird ein erstes elektrisches Potenzial, das am Kanalausgang anliegt, erzeugt. Ein zweites elektrisches Potenzial, das am ersten Kanaleingang anliegt, wird ebenfalls mit den Transformatormitteln erzeugt. Der Betrag des zweiten elektrischen Potenzials ist niedriger als der Betrag des ersten elektrischen Potenzials und größer als der Betrag des Massenpotenzials. Das zweite elektrische Potenzial liegt also zwischen dem Massenpotenzial und dem ersten elektrischen Potenzial. Es besteht also eine Spannung zwischen dem ersten elektrischen Potenzial und dem zweiten elektrischen Potenzial. Diese Spannung wird für den Betrieb des Zweidraht-Messumformers benötigt, da dieser nicht über eine externe Spannungsversorgung verfügt. Für den Betrieb des Zweidraht-Messumformers ist also eine Potenzialdifferenz zwischen dem ersten und dem zweiten elektrischen Potenzial nötig. Es ist zu beachten, dass lediglich die Beträge des ersten und des zweiten elektrischen Potenzials größer als der Betrag des Massenpotenzials sein muss. Falls das Massenpotenzial also zum Beispiel 0 Volt beträgt, können das erste und das zweite elektrische Potenzial sowohl positive als auch negative Werte annehmen. Dabei ist zu beachten, dass entweder sowohl das erste elektrische Potenzial und das zweite elektrische Potenzial positiv sind oder dass sowohl das erste elektrische Potenzial und das zweite elektrische Potenzial negativ sind.

Es wird also ein Strom für einen Funktionstest des angeschlossenen Zweidraht-Messumformers durch eine Potenzialdifferenz zwischen dem ersten elektrischen Potenzial und dem zweiten elektrischen Potenzial erzeugt. Die Erzeugung des Stroms erfolgt unabhängig von einer Parametrierung des Zweidraht-Messumformers durch die speicherprogrammierbare Steuerung.

Nach Ausführungsformen der Erfindung wird eine Potenzialdifferenz zwischen dem Massenpotenzial und dem zweiten Kanaleingang angelegt. Diese Potenzialdifferenz kann beispielsweise dazu dienen, ein Spannungssignal zwischen dem ersten Kanaleingang und dem zweiten Kanaleingang anzulegen. Vorzugsweise handelt es sich bei dem Spannungssignal um eine sogenannte Common Mode Spannung oder auch Gleichtaktspannung. Vorzugsweise ist der Betrag dieser Spannung kleiner als der Betrag des zweiten elektrischen Potenzials.

Das Gleichtaktspannungssignal dient dazu, Widerstände der Leitungen, die zu dem Vierdraht-Messumformer führen, und eventueller zwischengeschalteter Messgeräte zu kompensieren. Wenn beispielsweise über die Verkabelung und ein Messgerät eine Spannung von 4 Volt abfällt, wird zum Ausgleich eine Gleichtaktspannung in Höhe von 4 Volt angelegt.

Der Betrag der Potenzialdifferenz zwischen dem Massenpotenzial und dem zweiten Kanaleingang ist dabei kleiner als der Betrag des zweiten elektrischen Potenzials.

In einem weiteren Aspekt betrifft die Erfindung eine analoge Eingabebaugruppe für eine speicherprogrammierbare Steuerung. Die analoge Eingabebaugruppe weist ein Massenpotenzial auf. Die Baugruppe umfasst zumindest einen Kanalausgang, einen ersten Kanaleingang, einen zweiten Kanaleingang und einen dritten Kanaleingang. Das Massenpotenzial der analogen Eingabebaugruppe ist das Massenpotenzial des Kanalausgangs, des ersten Kanaleingangs, des zweiten Kanaleingangs und des dritten Kanaleingangs.

Der Kanalausgang ist dazu ausgebildet, auf einem ersten elektrischen Potenzial zu liegen. Der erste Kanaleingang ist dazu ausgebildet, auf einem zweiten elektrischen Potenzial zu liegen. Der Betrag des zweiten elektrischen Potenzials ist niedriger als der Betrag des ersten elektrischen Potenzials und größer als der Betrag des Massenpotenzials. Es ist dabei zu beachten, dass entweder sowohl das erste elektrische Potenzial und das zweite elektrische Potenzial größer als das Massenpotenzial sind oder dass sowohl das erste elektrische Potenzial und das zweite elektrische Potenzial kleiner als das Massenpotenzial sind.

Die analoge Eingabebaugruppe ist für den Einbau in einer speicherprogrammierbaren Steuerung ausgebildet. Die speicherprogrammierbare Steuerung kann sich beispielsweise in einem Automatisierungsnetzwerk befinden.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Der Kanalausgang und der erste Kanaleingang sind zum Anschluss eines Zweidraht-Messumformers ausgebildet. Der erste Kanaleingang und der zweite Kanaleingang sind zum Anschluss eines Vierdraht-Messumformers ausgebildet. Der zweite und der dritte Kanaleingang sind zum Anschluss zumindest einer weiteren Messschaltung ausgebildet.

Nach Ausführungsformen der Erfindung ist die analoge Eingabebaugruppe dazu ausgebildet, dass eine Spannung zwischen dem zweiten Kanaleingang und dem Massenpotenzial angelegt wird.

Der Betrag der Spannung zwischen dem zweiten Kanaleingang und dem Massenpotenzial ist dabei kleiner als der Betrag der Potenzialdifferenz zwischen dem zweiten elektrischen Potenzial und dem Massenpotenzial.

Nach Ausführungsformen der Erfindung weist die analoge Eingabebaugruppe Schaltmittel auf. Die Schaltmittel sind dazu ausgebildet, ein an einem der Kanaleingänge der analogen Eingabebaugruppe empfangenes Signal an einen Verstärker der speicherprogrammierbaren Steuerung auszugeben. Mit anderen Worten sind die Schaltmittel dazu ausgebildet, zwischen verschiedenen Messmethoden hin- und herzuschalten. Je nach Schaltung der Schaltmittel können also unterschiedliche an die Kanaleingänge angeschlossene Messschaltungen verwendet werden.

Nach Ausführungsformen der Erfindung umfasst die analoge Eingabebaugruppe Transformatormittel mit einer Primärspule und einer ersten und einer zweiten Sekundärspule. Die Transformatormittel sind dazu ausgebildet, dass erste und das zweite Potenzial mit einer Primärspule und der ersten Sekundärspule zu erzeugen. Die Transformatormittel sind außerdem dazu ausgebildet, eine Versorgungsspannung der analogen Eingabebaugruppe mit der Primärspule und der zweiten Sekundärspule zu erzeugen.

Nach Ausführungsformen der Erfindung ist die Versorgungsspannung eine Spannung zwischen einem dritten elektrischen Potenzial und einem vierten elektrischen Potenzial. Das dritte elektrische Potenzial ist dabei größer als das Massenpotenzial und das vierte elektrische Potenzial ist kleiner als das Massenpotenzial. Sowohl das Massenpotenzial als auch das erste und das zweite elektrische Potenzial werden also durch die Transformatormittel erzeugt. Die Transformatormittel können beispielsweise aus zwei Sekundärspulen und einer Primärspule bestehen. Dies ist besonders platzsparend, da mit einer Primärspule sowohl die Versorgungsspannung der analogen Eingabebaugruppe als auch das erste und das zweite elektrische Potenzial erzeugt werden. Die Spannung zwischen dem ersten und dem zweiten elektrischen Potenzial kann auch als Geberversorgung für den Zweidraht-Messumformer bezeichnet werden.

Nach Ausführungsformen der Erfindung ist die zumindest eine weitere Messschaltung zumindest ein Widerstandsthermometer, zumindest ein Thermoelement und/oder zumindest ein Spannungsmesser.

Nach Ausführungsformen der Erfindung weist die analoge Eingabebaugruppe mehrere Kanäle auf. Jeder der Kanäle weist einen Kanalausgang, einen ersten Kanaleingang, einen zweiten Kanaleingang und einen dritten Kanaleingang auf. Es kann also jeder Kanal so ausgebildet sein, dass ein erstes elektrische Potenzial am Kanalausgang und ein zweites elektrisches Potenzial am ersten Kanaleingang anliegt. Jeder Kanal weist zudem ein kanaleigenes Massenpotenzial auf. Das Massenpotenzial eines ersten Kanals muss also nicht gleich des Massenpotenzials eines zweiten Kanals sein. Jeder Kanal der analogen Eingabebaugruppe kann nach Ausführungsformen der Erfindung ausgebildet sein.

In einem weiteren Aspekt betrifft die Erfindung eine speicherprogrammierbare Steuerung für ein Automatisierungssystem mit zumindest einer analogen Eingabebaugruppe nach Ausführungsformen der Erfindung.

In noch einem weiteren Aspekt betrifft die Erfindung ein Automatisierungssystem mit zumindest einer speicherprogrammierbaren Steuerung nach Ausführungsformen der Erfindung.

Im Nachfolgenden werden Ausführungsformen der Erfindung anhand der Figuren näher erläutert. Es zeigen:
- FIG 1: eine schematische Darstellung einer analogen Eingabebaugruppe nach Ausführungsformen der Erfindung mit angeschlossenen Messschaltungen;
- FIG 2: eine schematische Darstellung von Transformatormitteln einer analogen Eingabebaugruppe mit einer Primärspule und zwei Sekundärspulen; und
- FIG 3: ein Flussdiagramm eines Verfahrens nach Ausführungsformen der Erfindung.

Elemente der nachfolgenden Figuren, die einander entsprechen, sind mit denselben Bezugszeichen gekennzeichnet.

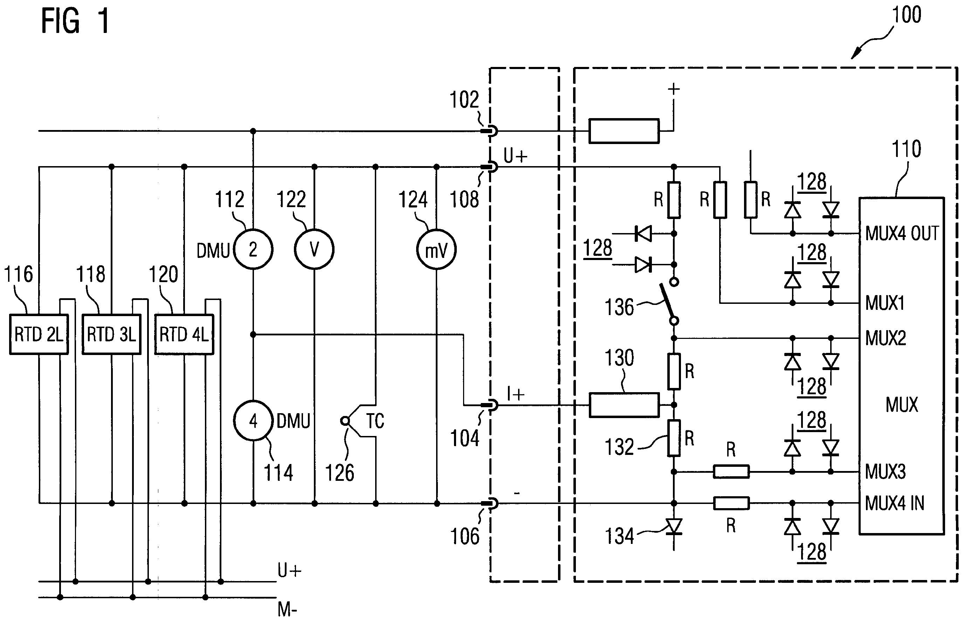

FIG 1 ist eine schematische Darstellung einer analogen Eingabebaugruppe 100. Die analoge Eingabebaugruppe 100 umfasst einen Kanalausgang 102, einen ersten Kanaleingang 104, einen zweiten Kanaleingang 106 und einen dritten Kanaleingang 108. Außerdem verfügt die analoge Eingabebaugruppe 100 über einen Multiplexer 110, der als Schaltmittel dient. Alternativ zum Multiplexer 110 können auch Analogschalter oder Optorelais verwendet werden. Der Multiplexer 110 hat vier Eingänge Mux1 bis Mux4 und einen Ausgang Mux4out. Ein Zweidraht-Messumformer 112 ist an den Kanalausgang 102 und an den ersten Kanaleingang 104 angeschlossen. Ein Vierdraht-Messumformer 114 ist an den ersten Kanaleingang 104 und an den zweiten Kanaleingang 106 angeschlossen. Weitere Messschaltungen wie zum Beispiel Widerstandsmessschaltungen 116, 118 und 120, Spannungsmessschaltungen 122 und 124 und ein Thermoelement 126 sind an den zweiten Kanaleingang 106 und an den dritten Kanaleingang 108 angeschlossen.

Die Kanaleingänge 104 - 108 gehören alle zu einem ersten Kanal der analogen Eingabebaugruppe 100. Ein zweiter Kanal ist hier aus Übersichtlichkeitsgründen nicht dargestellt. Allerdings ist dargestellt, dass die Widerstandsmessschaltungen 116 - 120 ebenfalls mit dem zweiten Kanaleingang eines zweiten Kanals der analogen Eingabebaugruppe und mit einem dritten Kanaleingang des zweiten Kanals der analogen Eingabebaugruppe 100 verbunden sind.

Die Versorgungsspannung der analogen Eingabebaugruppe 100 ist über Schutzdioden 128 mit dem Schaltkreis der analogen Eingabebaugruppe verbunden. Die Versorgungsspannung ist so gewählt, dass die Schutzdioden 128 jeweils in Sperrrichtung geschaltet sind. Diese Beschaltung dient zum Schutz vor Überspannungen.

Der erste Kanaleingang 104 ist über einen Strombegrenzungswiderstand 130 und einen Shuntwiderstand 132 mit dem zweiten Kanaleingang 106 verbunden. Der zweite Kanaleingang 106 ist über eine Diode 134 mit der Masse der Geberversorgung für den Zweidraht-Messumformer 112 verbunden. Es ist zu beachten, dass die Masse der Geberversorgung für den Zweidraht-Messumformer 112 nicht identisch mit dem Massenpotenzial des Kanalausgangs 102 und der drei Kanaleingänge 104 - 108 ist. Der Zweidraht-Messumformer 112 ist über den Ausgang 102 mit dem Pluskanal der Geberversorgung für den Zweidraht-Messumformer 112 verbunden. Es ist vorteilhaft, dass der erste Kanaleingang 104 und der zweite Kanaleingang 106 über die Diode 134 mit der Masse der Geberversorgung für den Zweidraht-Messumformer 112 verbunden sind, anstatt mit der Masse der Kanalein- und -ausgänge 102 - 108, weil so eine Gleichtaktspannung an den Kanaleingängen 104 und 106 angelegt werden kann, die vom Betrag her geringer als der Betrag der Masse der Geberversorgung ist. Wenn beispielsweise als Masse der Geberversorgung 11 Volt gewählt wird, kann an den Kanaleingängen 104 und 106 eine Gleichtaktspannung in Höhe von 10 Volt angelegt werden. Es ist zu beachten, dass die Diode 134 in Sperrrichtung betrieben wird. Wenn die Masse der Geberversorgung also beispielsweise +11 Volt beträgt, wird die Diode so eingesetzt, dass kein Strom fließt. Dies entspricht der Anordnung der Diode 134 in Figur 1. Wenn als Masse der Geberversorgung ein negativer Wert gewählt wird, muss die Diode 134 dementsprechend in umgekehrter Richtung betrieben werden, sodass sie auch hier in Sperrrichtung betrieben wird.

Mit einer analogen Eingabebaugruppe 100 ist es also möglich, dass der Zweidraht-Messumformer 112 ohne Parametrierung durch die speicherprogrammierbare Steuerung getestet werden kann, da die Geberversorgungsspannung zwischen den Kanalausgang 102 und dem ersten Kanaleingang 104 am Zweidraht-Messumformer 112 anliegt. Außerdem ist es möglich, an den Vierdraht-Messumformer 114, der an den ersten Kanaleingang 104 und an den zweiten Kanaleingang 106 angeschlossen ist, eine Gleichtaktspannung anzulegen. Diese Gleichtaktspannung muss vom Betrag her geringer sein als der Betrag des Potenzials der Masse der Geberversorgung. Mit der Gleichtaktspannung können beispielsweise Leitungswiderstände oder Widerstände von Messgeräten, die zwischen der analogen Eingabebaugruppe und dem Vierdraht-Messumformer 114 geschaltet sind, kompensiert werden. Wenn beispielsweise über die Leitungen und ein Messgerät 10 Volt abfallen, kann dies mit einem Gleichtaktsignal in Höhe von 10 Volt kompensiert werden.

Es ist mit der analogen Eingabebaugruppe 100 also möglich, den Zweidraht-Messumformer 112 ohne Parametrierung zu testen. Außerdem wird ermöglicht, dass ein Gleichtaktsignal an den ersten und zweiten Kanaleingang 104 und 106 angelegt wird. Dies wird dadurch ermöglicht, dass der erste und der zweite Kanaleingang 104 und 106 über die Diode 134 mit der Masse der Geberversorgung verbunden sind, die nicht identisch mit der Masse der Kanaleingänge 104 - 108 ist. Durch den Versatz des Massenpotenzials der Geberversorgung relativ zum Massenpotenzial der Kanaleingänge 104 - 108 wird das Anlegen der Gleichtaktspannung ermöglicht, ohne dass ein Strom zur Masse der Geberversorgung fließt, da die Diode 134 in Sperrrichtung geschaltet ist.

Der Multiplexer 110 umfasst einen Ausgang, über den ein Signal an einen Verstärker (nicht dargestellt) ausgegeben werden kann. Je nach Schaltung des Multiplexers 110 können unterschiedliche Signale an den Verstärker ausgegeben werden. Beispielsweise können Signale der Widerstandsmessschaltungen 116 - 120 durch Schalten der Eingänge Mux1 und Mux3 an den Verstärker ausgegeben werden. Durch Schalten der Eingänge Mux2 und Mux3 können Signale des Zweidraht-Messumformers 112 und des Vierdraht-Messumformers 114 an den Verstärker ausgegeben werden. Ebenfalls durch Schalten der Eingänge Mux1 und Mux3 können Signale der Spannungsmessschaltungen 122 und 124 an den Verstärker ausgegeben werden und auch Signale des Thermoelements 126. Durch Schließen eines Schalters 136 kann ein Spannungsteiler zur Messung von höheren Spannungen mit Spannungsmessschaltung 122 realisiert werden. Bei offenem Schalter 136 werden niedrigere Spannungen mit Spannungsmessschaltung 124 gemessen.

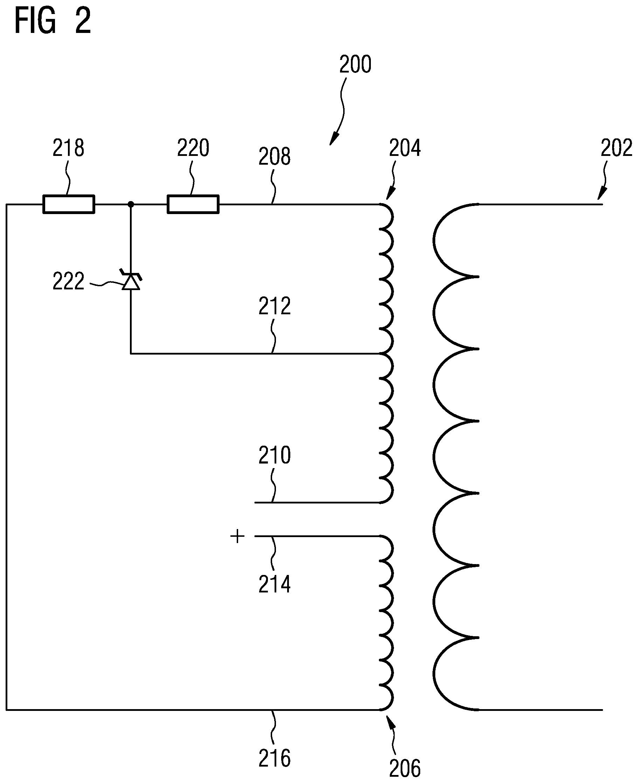

In FIG 2 ist eine schematische Darstellung von Transformatormitteln 200 für eine analoge Eingabebaugruppe 100 (nicht in FIG 2 abgebildet) dargestellt. Die Transformatormittel 200 umfassen eine Primärspule 202 und zwei Sekundärspulen 204 und 206. Mit der Primärspule 202 und der Sekundärspule 204 werden insgesamt drei Potenziale erzeugt, die in der analogen Eingabebaugruppe verwendet werden. Am ersten Ende der Sekundärspule 204 wird die positive Versorgungsspannung 208 erzeugt und am zweiten Ende der Sekundärspule 204 die negative Versorgungsspannung 210. In der Mitte der Sekundärspule 204 wird das Massenpotenzial für die Kanaleingänge der analogen Eingabebaugruppe abgenommen. Vorzugsweise befindet sich das Massenpotenzial 212 bei 0 Volt. Dies bedeutet, dass der Betrag der positiven Versorgungsspannung 208 gleich dem Betrag der negativen Versorgungsspannung 210 ist.

Mit der Primärspule 202 und der Sekundärspule 206 wird die Geberversorgung für den Zweidraht-Messumformer erzeugt. Das positive Potenzial der Geberversorgung 214 wird an einem ersten Ende der Sekundärspule 206 abgenommen und die Masse der Geberversorgung 216 wird an einem zweiten Ende der Sekundärspule 206 abgenommen. Die Masse der Geberversorgung 216 ist über einen Überstromschutz 218 und einen Widerstand 220 mit der positiven Versorgungsspannung 208 verbunden. Außerdem ist die Masse der Geberversorgung 216 über den Überstromschutz 218 und eine Diode 222 mit dem Massenpotenzial 212 verbunden. Die Diode 222 wird in Sperrrichtung betrieben und dient dazu, dass kein Kurzschluss zwischen dem Massenpotenzial 212 und der Masse der Geberversorgung 216 entsteht.

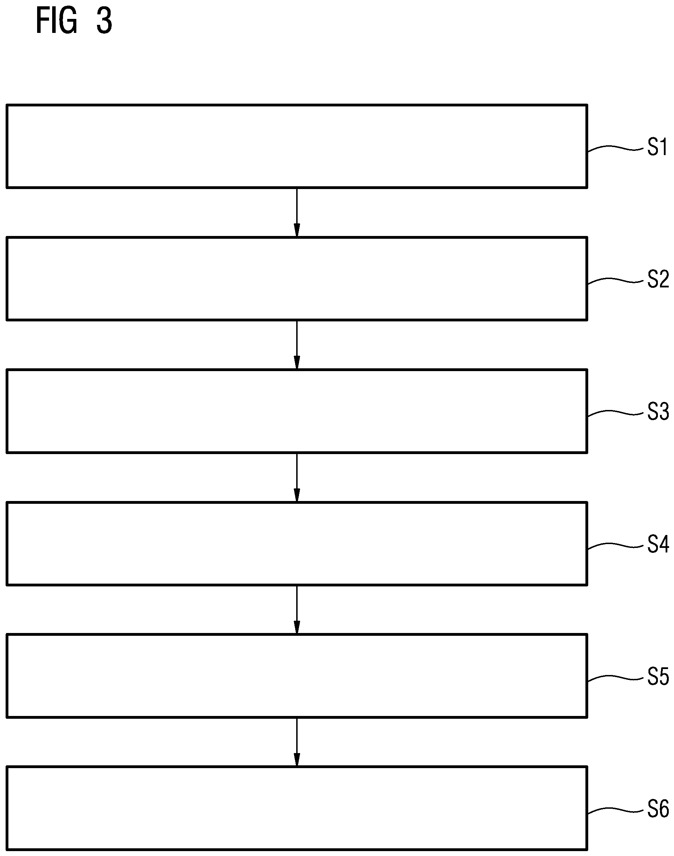

In FIG 3 ist ein Flussdiagramm eines Verfahrens nach Ausführungsformen der Erfindung dargestellt. In einem ersten Schritt S1 wird ein Zweidraht-Messumformer an den Kanalausgang der analogen Eingabebaugruppe und an den ersten Kanaleingang der analogen Eingabebaugruppe angeschlossen. In Schritt S2 wird ein Vierdraht-Messumformer an den ersten Kanaleingang der analogen Eingabebaugruppe und an den zweiten Kanaleingang der analogen Eingabebaugruppe angeschlossen. Weitere Messschaltungen können in Schritt S3 an den zweiten Kanaleingang und an den dritten Kanaleingang der analogen Eingabebaugruppe angeschlossen werden.

Ein erstes elektrisches Potenzial wird in Schritt S4 erzeugt. Das erste elektrische Potenzial liegt am Kanalausgang an. Die Erzeugung erfolgt mit Transformatormitteln. Mit den Transformatormitteln wird auch in Schritt S5 ein zweites elektrisches Potenzial erzeugt, das am ersten Kanaleingang anliegt. Der Betrag des zweiten elektrischen Potenzials ist dabei kleiner als der Betrag des ersten elektrischen Potenzials und größer als der Betrag des Massenpotenzials.

In Schritt S6 wird ein Strom für einen Funktionstest des angeschlossenen Zweidraht-Messumformers erzeugt. Die Erzeugung geschieht durch eine Potenzialdifferenz zwischen dem ersten elektrischen Potenzial und dem zweiten elektrischen Potenzial.

## Patentansprüche

1. Verfahren zum Betrieb einer analogen Eingabebaugruppe (100) in einer speicherprogrammierbaren Steuerung, wobei die analoge Eingabebaugruppe ein Massenpotential (212) für einen Kanalausgang (102), einen ersten Kanaleingang (104), einen zweiten Kanaleingang (106) und einen dritten Kanaleingang (108) aufweist, und wobei das Verfahren die folgenden Schritte umfasst:
- Anschluss (S1) eines Zweidraht-Messumformers (112) an den Kanalausgang der analogen Eingabebaugruppe und an den ersten Kanaleingang der analogen Eingabebaugruppe;
- Anschluss (S2) eines Vierdraht-Messumformers (114) an den ersten Kanaleingang der analogen Eingabebaugruppe und an den zweiten Kanaleingang der analogen Eingabebaugruppe;
- Anschluss (S3) weiterer Messschaltungen (116; 118; 120; 122; 124) an den zweiten Kanaleingang und an den dritten Kanaleingang der analogen Eingabebaugruppe;
- Erzeugung (S4) eines ersten elektrischen Potentials (214), das am Kanalausgang anliegt, mit Transformatormitteln (200);
- Erzeugung (S5) eines zweiten elektrischen Potentials (216), das am ersten Kanaleingang anliegt, mit den Transformatormitteln, wobei der Betrag des zweiten elektrischen Potentials kleiner als der Betrag des ersten elektrischen Potential und größer als der Betrag des Massenpotentials ist;
- Erzeugung (S6) eines Stroms für einen Funktionstest des angeschlossenen Zweidraht-Messumformers durch eine Potentialdifferenz zwischen dem ersten elektrischen Potential und dem zweiten elektrischen Potential.

2. Verfahren nach Anspruch 1, wobei das Verfahren ferner den folgenden Schritt umfasst:
- Anlegen einer Potentialdifferenz zwischen dem Massenpotential und dem zweiten Kanaleingang.

3. Analoge Eingabebaugruppe (100) für eine speicherprogrammierbare Steuerung, wobei die analoge Eingabebaugruppe ein Massenpotential (212) aufweist, mit zumindest:
- einem Kanalausgang (102), wobei der Kanalausgang dazu ausgebildet ist, auf einem ersten elektrischen Potential zu liegen;
- einem ersten Kanaleingang (104), wobei der erste Kanaleingang dazu ausgebildet ist, auf einem zweiten elektrischen Potential zu liegen, wobei der Betrag des zweiten elektrischen Potentials niedriger als der Betrag des ersten elektrischen Potentials und größer als der Betrag des Massenpotentials ist;
- einem zweiten Kanaleingang (106); und
- einem dritten Kanaleingang (108);
wobei der Kanalausgang und der erste Kanaleingang zum Anschluss eines Zweidraht-Messumformers (112) ausgebildet sind, wobei der erste Kanaleingang und der zweite Kanaleingang zum Anschluss eines Vierdraht-Messumformers (114) ausgebildet sind,
wobei der zweite und der dritte Kanaleingang zum Anschluss zumindest einer weiteren Messschaltungen (116; 118; 120; 122; 124) ausgebildet sind,
und wobei das Massenpotential der analogen Eingabebaugruppe das Massenpotential des Kanalausgangs, des ersten Kanaleingangs, des zweiten Kanaleingangs und des dritten Kanaleingangs ist.

4. Analoge Eingabebaugruppe nach Anspruch 3, wobei die analoge Eingabebaugruppe dazu ausgebildet ist, dass eine Spannung zwischen dem zweiten Kanaleingang und dem Massenpotential angelegt wird, wobei der Betrag der Spannung zwischen dem zweiten Kanaleingang und dem Massenpotential kleiner als der Betrag der Potentialdifferenz zwischen dem zweiten elektrischen Potential und dem Massenpotential ist.

5. Analoge Eingabebaugruppe nach einem der Ansprüche 3 oder 4, wobei die analoge Eingabebaugruppe Schaltmittel (110) aufweist, wobei die Schaltmittel dazu ausgebildet sind, ein an einem der Eingänge der analogen Eingabebaugruppe empfangenes Signal an einen Verstärker der speicherprogrammierbaren Steuerung auszugeben.

6. Analoge Eingabebaugruppe nach einem der Ansprüche 3 bis 5, wobei die analoge Eingabebaugruppe Transformatormittel (200) mit einer Primärspule (202) und einer ersten (204) und einer zweiten Sekundärspule (206) umfasst, wobei die Transformatormittel dazu ausgebildet sind, das erste und das zweite Potential mit der Primärspule und der ersten Sekundärspule zu erzeugen, und wobei die Transformatormittel dazu ausgebildet sind, eine Versorgungsspannung der analogen Eingabebaugruppe mit der Primärspule und der zweiten Sekundärspule zu erzeugen.

7. Analoge Eingabebaugruppe nach Anspruch 6, wobei die Versorgungsspannung eine Spannung zwischen einem dritten elektrischen Potential (208) und einem vierten elektrischen Potential (210) ist, wobei das dritte elektrische Potential größer als das Massenpotential ist, und wobei das vierte elektrische Potential kleiner als das Massenpotential ist.

8. Analoge Eingabebaugruppe nach einem der Ansprüche 3 bis 7, wobei die zumindest eine weitere Messschaltung zumindest ein Widerstandsthermometer (116; 118; 120), zumindest ein Thermoelement (126) und/oder zumindest ein Spannungsmesser (122; 124) ist.

9. Analoge Eingabebaugruppe nach einem der Ansprüche 3 bis 8, wobei die analoge Eingabebaugruppe mehrere Kanäle aufweist, wobei jeder der Kanäle einen Kanalausgang, einen ersten Kanaleingang, einen zweiten Kanaleingang und einen dritten Kanaleingang aufweist.

10. Speicherprogrammierbare Steuerung für ein Automatisierungssystem mit zumindest einer analogen Eingabebaugruppe nach einem der Ansprüche 3 bis 9.

11. Automatisierungssystem mit zumindest einer speicherprogrammierbaren Steuerung nach Anspruch 10.

## Claims

1. Method for operating an analogue input module (100) in a programmable logic controller, wherein the analogue input module has a ground potential (212) for a channel output (102), a first channel input (104), a second channel input (106) and a third channel input (108), and wherein the method comprises the following steps of:
- connecting (S1) a two-wire measuring transducer (112) to the channel output of the analogue input module and to the first channel input of the analogue input module;
- connecting (S2) a four-wire measuring transducer (114) to the first channel input of the analogue input module and to the second channel input of the analogue input module;
- connecting (S3) further measurement circuits (116; 118; 120; 122; 124) to the second channel input and to the third channel input of the analogue input module;
- generating (S4) a first electrical potential (214) which is present at the channel output with the aid of transformer means (200);
- generating (S5) a second electrical potential (216) which is present at the first channel input with the aid of the transformer means, the absolute value of the second electrical potential being less than the absolute value of the first electrical potential and greater than the absolute value of the ground potential;
- generating (S6) a current for performing a functional test of the connected two-wire measuring transducer as a result of a potential difference between the first electrical potential and the second electrical potential.

2. Method according to claim 1, wherein the method additionally comprises the following step of:
- applying a potential difference between the ground potential and the second channel input.

3. Analogue input module (100) for a programmable logic controller, wherein the analogue input module has a ground potential (212), comprising at least:
- one channel output (102), the channel output being embodied to lie at a first electrical potential;
- a first channel input (104), the first channel input being embodied to lie at a second electrical potential, the absolute value of the second electrical potential being less than the absolute value of the first electrical potential and greater than the absolute value of the ground potential;
- a second channel input (106); and
- a third channel input (108);
wherein the channel output and the first channel input are embodied for connecting a two-wire measuring transducer (112), wherein the first channel input and the second channel input are embodied for connecting a four-wire measuring transducer (114),
wherein the second and the third channel input are embodied for connecting at least one further measurement circuit (116; 118; 120; 122; 124),
and wherein the ground potential of the analogue input module is the ground potential of the channel output, of the first channel input, of the second channel input and of the third channel input.

4. Analogue input module according to claim 3, wherein the analogue input module is embodied for a voltage to be applied between the second channel input and the ground potential, the absolute value of the voltage between the second channel input and the ground potential being less than the absolute value of the potential difference between the second electrical potential and the ground potential.

5. Analogue input module according to one of claims 3 or 4, wherein the analogue input module has switching means (110), the switching means being embodied for the purpose of outputting a signal received at one of the inputs of the analogue input module to an amplifier of the programmable logic controller.

6. Analogue input module according to one of claims 3 to 5, wherein the analogue input module comprises transformer means (200) having a primary coil (202) and a first (204) and second secondary coil (206), the transformer means being embodied for the purpose of generating the first and second potential by means of the primary coil and the first secondary coil, and the transformer means being embodied for the purpose of generating a supply voltage of the analogue input module by means of the primary coil and the second secondary coil.

7. Analogue input module according to claim 6, wherein the supply voltage is a voltage between a third electrical potential (208) and a fourth electrical potential (210), the third electrical potential being greater than the ground potential, and the fourth electrical potential being less than the ground potential.

8. Analogue input module according to one of claims 3 to 7, wherein the at least one further measurement circuit is at least one resistance temperature detector (116; 118; 120), at least one thermocouple element (126) and/or at least one voltmeter (122; 124).

9. Analogue input module according to one of claims 3 to 8, wherein the analogue input module has a plurality of channels, each of the channels having a channel output, a first channel input, a second channel input and a third channel input.

10. Programmable logic controller for an automation system having at least one analogue input module according to one of claims 3 to 9.

11. Automation system having at least one programmable logic controller according to claim 10.

## Revendications

1. Procédé pour faire fonctionner un module ( 100 ) d'acquisition analogique d'un automate programmable, le module d'acquisition analogique ayant un potentiel ( 212 ) de masse pour une sortie ( 102 ) de canal, une première entrée ( 104 ) de canal, une deuxième entrée ( 106 ) de canal et une troisième entrée ( 108 ) de canal, le procédé comprenant les stades suivants :
- Raccordement ( S1 ) d'un transducteur de mesure ( 112 ) bifilaire à la sortie du canal du module d'acquisition analogique et à la première entrée du canal du module d'acquisition analogique ;
- Raccordement ( S2 ) d'un transducteur de mesure ( 114 ) quadrifilaire à la première entrée du canal du module d'acquisition analogique et à la deuxième entrée du canal du module d'acquisition analogique ;
- Raccordement ( S3 ) d'autres circuits ( 116 ; 118 ; 120 ; 122 ; 124 ) de mesure à la deuxième entrée du canal et à la troisième entrée du canal du module d'acquisition analogique ;
- Production ( S4 ) d'un premier potentiel ( 214 ) électrique, qui s'applique à la sortie du canal, par des moyens ( 200 ) à transformateur ;
- Production ( S5 ) d'un deuxième potentiel ( 216 ) électrique, qui s'applique à la première entrée du canal, par les moyens à transformateur, la valeur absolue du deuxième potentiel électrique étant plus petite que la valeur absolue du premier potentiel électrique et plus grande que la valeur absolue du potentiel de masse ;
- Production ( 56 ) d'un courant pour un test de fonctionnement du transducteur de mesure bifilaire raccordée, par une différence de potentiel entre le premier potentiel électrique et le deuxième potentiel électrique.

2. Procédé suivant la revendication 1, dans lequel le procédé comprend, en outre, le stade suivant :
- Application d'une différence de potentiel entre le potentiel de masse et la deuxième entrée du canal.

3. Module ( 100 ) d'acquisition analogique pour un automate programmable, le module d'acquisition analogique ayant un potentiel ( 212 ) de masse comprenant au moins :
- une sortie ( 102 ) de canal, la sortie du canal étant constituée pour être à un premier potentiel électrique ;
- une première entrée ( 104 ) du canal, la première entrée du canal étant constituée pour être à un deuxième potentiel électrique, la valeur absolue du deuxième potentiel électrique étant plus petite que la valeur absolue du premier potentiel électrique et plus grande que la valeur absolue du potentiel de masse ;
- une deuxième entrée ( 106 ) du canal ; et
- une troisième entrée ( 108 ) du canal ;
dans lequel la sortie du canal et la première entrée du canal sont constituées pour le raccordement d'un transducteur de mesure ( 112 ) bifilaire, la première entrée du canal et la deuxième entrée du canal étant constituées pour le raccordement d'un transducteur de mesure ( 114 ) quadrifilaire,
la deuxième et la troisième entrées du canal étant constituées pour le raccordement d'au moins un autre circuit ( 116 ; 118 ; 120 ; 122 ; 124 ) de mesure,
et le potentiel de masse du module d'acquisition analogique étant le potentiel de masse de la sortie du canal, de la première entrée du canal, de la deuxième entrée du canal et de la troisième entrée du canal.

4. Module d'acquisition analogique suivant la revendication 3, dans lequel le module d'acquisition analogique est constitué pour appliquer une tension entre la deuxième entrée du canal et le potentiel de masse, la valeur absolue de la tension entre la deuxième entrée du canal et le potentiel de masse étant plus petite que la valeur absolue de la différence de potentiel entre le deuxième potentiel électrique et le potentiel de masse.

5. Module d'acquisition analogique suivant l'une des revendications 3 ou 4, dans lequel le module d'acquisition analogique a des moyens ( 110 ) de commutation, les moyens de commutation étant constitués pour donner un signal reçu à l'une des entrées du module d'acquisition analogique à un amplificateur de l'automate programmable.

6. Module d'acquisition analogique suivant l'une des revendications 3 à 5, dans lequel le module d'acquisition analogique a des moyens ( 200 ) à transformateur ayant une bobine ( 202 ) primaire et une première ( 204 ) et une deuxième bobines ( 206 ) secondaires, les moyens à transformateur étant constitués pour produire le premier et le deuxième potentiels par la bobine primaire et par la première bobine secondaire, les moyens à transformateur étant constitués pour produire une tension d'alimentation du module d'acquisition analogique par la bobine primaire et par la deuxième bobine secondaire.

7. Module d'acquisition analogique suivant la revendication 6, dans lequel la tension d'alimentation est une tension entre un troisième potentiel ( 208 ) électrique et un quatrième potentiel ( 210 ) électrique, le troisième potentiel électrique étant plus grand que le potentiel de masse et le quatrième potentiel électrique étant plus petit que le potentiel de masse.

8. Module d'acquisition analogique suivant l'une des revendications 3 à 7, dans lequel le au moins un autre circuit de mesure est au moins un thermomètre ( 116 ; 118 ; 120 ) à résistance, au moins un thermocouple ( 126 ) et/ou au moins un voltmètre ( 112 ; 124 ).

9. Module d'acquisition analogique suivant l'une des revendications 3 à 8, dans lequel le module d'acquisition analogique a plusieurs canaux, chacun des canaux a une sortie de canal, une première entrée de canal, une deuxième entrée de canal et une troisième entrée de canal.

10. Automate programmable pour un système d'automatisation ayant au moins un module d'acquisition analogique selon l'une des revendications 3 à 9.

11. Système d'automatisation ayant au moins un automate programmable suivant la revendication 10.
